# FASCICULE DE BREVET EUROPEEN

(11) **EP 0 768 541 B1**
(45) Date de publication et mention de la délivrance du brevet: **29.09.1999**
(21) Numéro de dépôt: 96203438.5
(22) Date de dépôt: 25.06.1993
(51) Int. Cl.: G01S 13/56

(54) **Procédé de détection et de protection de personnes et objets**
Verfahren und Vorrichtung zum Auffinden und Schützen von Personen und Objekten
Device and method for sensing and protecting persons and objects

(30) Priorité: 25.06.1992 BE 9200596
(43) Date de publication de la demande: 16.04.1997
(62) Demande divisionnaire de: 93912484.8
(73) Titulaire: BELGIAN ELECTRONIC RESEARCH S.A. (B.E.R.), B-4101 Seraing (BE)
(72) Inventeur: Van Genechten, Fernand, 4000 Liège (BE)
(74) Mandataire: Vanderperre, Robert

(56) Documents cités:
- EP-A- 0 226 322
- DE-A- 3 422 228
- US-A- 4 815 046

## Description

### Domaine technique

La présente invention se rapporte aux dispositifs électroniques pour la détection et/ou la protection de personnes ou d'objets dans l'environnement immédiat de dispositifs automatiques, tels que portes automatiques ou dispositifs automatiques potentiellement dangereux, afin d'éviter tout mouvement de ceux-ci qui peuvent entraîner un contact dangereux avec ces personnes ou objets.

### Technique antérieure

On connaît (par exemple par la publication FR-A-2160274) des détecteurs électroniques comprenant un émetteur pour émettre des ondes ou des radiations, telles que des ondes hyperfréquences ou des radiations infrarouges, et un récepteur pour capter les ondes réfléchies ou le rayonnement diffus réfléchi par un obstacle situé dans le champ spatial couvert, de manière à produire un signal de détection en fonction des caractéristiques du rayonnement réfléchi. A cet égard, on connaît des détecteurs de mouvement hyperfréquences à effet Doppler qui, installés classiquement à la partie supérieure d'une porte automatique, couvrent un champ spatial de détection dont la forme et les dimensions sont déterminées par l'antenne utilisée et qui ont pour fonction de commander l'ouverture de la porte suite à la détection de tout mouvement d'une personne ou d'un objet dans le champ de détection.

Généralement, on désire que le lobe de détection ainsi développé par le détecteur soit relativement ample et que le détecteur détecte tout mouvement avec une égale sensibilité, quelle que soit la direction du mouvement de la personne ou de l'objet par rapport à la porte.

Dans certains cas, il est souhaitable cependant que la profondeur du lobe de détection projeté devant la porte soit plus réduite. Le cas se présente notamment lorsque le détecteur doit commander l'ouverture d'une porte située à proximité d'un trottoir ou dans une galerie commerciale. On conçoit bien, dans ce cas, que le trafic incessant de piétons déambulant sur le trottoir ou dans la galerie, sans intention de passer par la porte, ne doit pas provoquer l'ouverture intempestive de celle-ci.

Il en va de même lorsque le détecteur doit assurer la protection de personnes ou d'objets aux abords immédiats d'une porte tournante à tambour ou porte-revolver, appelée ci-après porte-tambour, d'une porte pivotante ou d'une porte-volet roulante ou à lamelles. Dans ce cas, le détecteur est fixé sur la porte elle-même et l'accompagne dans son mouvement, tout en surveillant l'environnement dangereux, c'est-à-dire l'espace situé devant le vantail mobile pour une porte-tambour ou une porte pivotante, ou l'espace entourant le bord horizontal d'attaque d'une porte-volet roulante. Dans ces cas d'application, la profondeur du lobe doit être réduite afin d'éviter, au cours du mouvement de la porte, et donc du détecteur, la détection de personnes ou d'objets situés en dehors des zones dangereuses.

Des solutions connues à ce jour et basées sur l'utilisation d'antennes cornets particulières, comme divulgué par FR-A-2160274 par exemple, permettent aux détecteurs de mouvement hyperfréquences à effet Doppler de développer un lobe de détection relativement peu profond. Une limite existe cependant à cette technologie, qui ne permet pas d'atteindre une profondeur de lobe sensiblement inférieure à un mètre.

Ce qui a été décrit ci-dessus s'applique également aux détecteurs de présence hyperfréquences, dont la fonction, contrairement aux détecteurs mentionnés plus haut, est de détecter la présence d'une personne ou d'un objet immobile dans leur champ de détection, afin d'empêcher la porte d'effectuer un mouvement dangereux. Dans ces cas d'application, la zone à protéger doit également être de profondeur très réduite et située à proximité de la porte afin de ne couvrir que la zone dangereuse et éviter un blocage intempestif par la détection d'une présence trop lointaine.

D'autres types de détecteurs, tels que des détecteurs infrarouges actifs, permettent, grâce à une optique constituée par exemple par des lentilles cylindriques de Fresnel, de détecter la présence - et a fortiori le mouvement - de tout être ou objet dans un champ de détection de profondeur très réduite, constituant un rideau de détection ou de protection.

Cependant, il est bien connu que les détecteurs de présence optoélectroniques sont particulièrement sensibles à la nature, la couleur et au pouvoir réfléchissant de l'arrière-plan qu'ils couvrent et de la cible à détecter. Selon le seuil de déclenchement fixé, la moindre perturbation non prévue entraîne une détection non voulue et ainsi l'ouverture ou le blocage intempestif de la porte, d'après la fonction du détecteur. Plus le détecteur est sensible - ce qui est généralement souhaité afin que la couverture qu'il assure devant la porte s'étende le plus près possible du sol - plus l'apparition de cette détection parasite est fréquente.

Des solutions existent afin de limiter les inconvénients cités ci-dessus. Elles impliquent cependant un traitement numérique du signal, ce qui grève le prix du détecteur.

D'autres types de détecteurs de présence et de mouvement basés sur la mesure du temps de propagation d'ondes ultrasonores présentent cependant certains des inconvénients cités ci-dessus, notamment les détections non voulues dues à la modification de la sensibilité du détecteur en fonction des conditions climatiques (température, humidité), la sensibilité aux vibrations, les courants d'air, situation courante dans l'environnement des portes automatiques.

Dans le cadre de l'application particulière citée plus haut, l'inconvénient principal présenté par ce genre de détecteur provient du fait que le lobe de détection présente une section au niveau du sol pratiquement circulaire. En effet, le lobe de détection est certes peu profond. Par contre, la largeur de celui-ci est trop faible pour assurer une couverture suffisante.

Par ailleurs, la technologie des hyperfréquences ou des ultrasons, telle qu'elle est utilisée jusqu'à présent, ne permet pas au détecteur de prendre en compte la composante angulaire du mouvement de la personne ou de l'objet détecté. En effet, dès que la personne ou l'objet pénètre dans le lobe de détection, les caractéristiques du rayonnement réfléchi se modifient, et le détecteur envoie un signal à l'automatisme commandant la porte. Cela se produit aussi bien si le mobile aborde la porte perpendiculairement avec l'intention d'y entrer, que si celui-ci ne fait que la longer sans intention d'y entrer.

Dans le cas de la détection de mouvement devant une porte située le long d'un trottoir ou d'une zone à fort trafic pédestre, on conçoit bien l'intérêt d'un détecteur capable de discriminer la direction et le sens du trafic des piétons. En effet, cela permet de ne commander l'ouverture de la porte qu'aux mobiles animés d'une composante de vitesse dirigée vers la porte, et de laisser la porte fermée en cas de trafic parallèle à la porte.

Cette application particulière pourrait trouver une solution grâce à des détecteurs infrarouges présentant un réseau matriciel d'émetteurs et de récepteurs. Ce réseau matriciel permettrait un traitement du signal apparenté au traitement d'images, dont il serait possible d'extraire des informations sur la direction et le sens de déplacement du mobile détecté. Ce traitement est cependant loin d'être simple, et ne peut conduire qu'à des détecteurs coûteux. De plus, ces détecteurs sont tributaires de la technologie utilisée, et ils sont sensibles à un certain nombre de facteurs tels que la nature, la couleur et le pouvoir réfléchissant de l'arrière-plan et de la cible à détecter.

Enfin, lorsque le détecteur se trouve agencé sur la ou les parties mobiles de la porte automatique, ou à bord d'un véhicule. Qu'il soit détecteur de mouvement ou détecteur de présence, un détecteur hyperfréquence se déplaçant avec un objet mobile voit son environnement changer par rapport à lui-même au cours de son déplacement. Tout se passe comme si le détecteur était fixe et que l'environnement se trouvait en déplacement relatif. Dans ces conditions, le signal utile délivré par le détecteur, soit le signal Doppler, soit un signal proportionnel à la puissance réfléchie, varie continuellement en fonction de l'environnement. En conséquence, il est impossible de fixer un seuil de détection représentatif d'un obstacle.

### Exposé de l'invention

La présente invention a pour but de remédier aux inconvénients énoncés et propose un procédé de détection et de protection de personnes et/ou objets dans l'environnement immédiat d'un dispositif automatique mobile au moyen d'un détecteur installé sur le dispositif mobile afin de couvrir un champ spatial de détection déterminé et produire un signal de détection pour commander le dispositif automatique mobile précité.

Conformément à l'invention, le signal de détection est mesuré en fonction du mouvement du dispositif mobile en l'absence d'obstacle. L'évolution dudit signal est mémorisée dans une mémoire électronique pour servir de courbe de référence. La valeur du signal de détection utile est mesurée en permanence et comparée à la valeur correspondante de la courbe de référence précitée. L'écart entre la valeur mesurée du signal utile et la valeur correspondante de la courbe de référence est utilisé pour indiquer la présence d'un obstacle formé par une personne et/ou un objet dans le champ de détection.

Suivant un autre aspect de l'invention, le détecteur effectue préalablement un cycle d'apprentissage de son environnement, au cours duquel le signal est saisi et mémorisé en fonction du temps.

### Brève description des dessins

Les figures 1 à 3 représentent des vues schématiques d'un exemple de mode de réalisation de la partie hyperfréquence d'un détecteur de personne et/ou objet.

La figure 4 montre un lobe de détection d'un détecteur associé à une porte automatique coulissante.

Les figures 5 et 6 illustrent deux exemples de lobes de détection émis par une antenne cornet.

Les figures 7 et 8 représentent les lobes de détection aux abords d'une porte automatique équipée d'un détecteur à antenne cornet.

La figure 9 montre dans une vue en plan la progression de piétons aux abords d'une porte automatique.

La figure 10 illustre la détection d'un piéton dans l'environnement d'une porte automatique en bordure de trottoir.

Les figures 11 et 12 représentent schématiquement une porte-tambour automatique équipée d'un dispositif de protection hyperfréquence conventionnel.

Les figures 13 et 14 représentent schématiquement une porte pivotante automatique équipée d'un dispositif de protection hyperfréquence conventionnel.

Les figures 15 et 16 représentent schématiquement une porte-volet roulante équipée d'un dispositif de protection hyperfréquence conventionnel.

Les figures 17 à 19 sont des vues, analogues aux figures 1 à 3, de la partie hyperfréquence d'un détecteur, équipée d'une antenne calculée pour développer un lobe large et peu profond, ou un lobe étroit et profond.

Les figures 20 et 21 représentent les lobes de détection développés par l'antenne montrée dans les figures 17 à 19.

La figure 22 est une illustration du lobe matriciel développé par un détecteur infrarouge actif devant une porte automatique coulissante.

La figure 23 montre un système de détection multilobes à ultrasons.

La figure 24 représente un guide d'ondes à fentes.

Les figures 25 et 26 sont des vues schématiques d'un mode de réalisation d'une antenne en guide d'ondes à fentes.

La figure 27 montre, en échelle relative, la répartition de puissance le long d'une antenne en guide d'ondes à fentes.

La figure 28 présente le diagramme polaire de rayonnement de l'antenne en guide d'ondes à fentes illustrée aux figures 25 et 26.

Les figures 29 et 30 représentent, respectivement en coupe transversale et en élévation, l'antenne en guide d'ondes à fentes représentée aux figures 25 et 26, mais munie de réflecteurs.

La figure 31 présente le diagramme polaire de rayonnement de l'antenne en guide d'ondes à fentes illustrée aux figures 29 et 30.

La figure 32 illustre un mode de fixation de réflecteurs sur un guide d'ondes.

La figure 33 représente une antenne en guide d'ondes à fentes avec réflecteurs, le tout formé d'une pièce extrudée.

La figure 34 illustre un mode de réalisation semblable à celui illustré à la figure 33, mais formé de deux parties assemblées.

La figure 35 illustre un autre mode de réalisation d'une antenne en guide d'ondes à fentes.

La figure 36 montre une antenne en guide d'ondes à fentes formée avec un boîtier extrudé.

La figure 37 est une représentation schématique d'un véhicule de transport automatique équipé d'un détecteur avec antenne en guide d'ondes à fentes.

La figure 38 représente une porte automatique coulissante équipée d'un détecteur.

La figure 39 est une vue schématique en coupe transversale d'une porte-tambour équipée de détecteurs.

La figure 40 montre l'évolution du signal fourni par un détecteur de mouvement avec antenne en guide d'ondes à fentes fixé à la partie inférieure d'une porte-volet roulante dans le cas où aucun obstacle n'est présent dans le champ de détection.

La figure 41 est semblable à la figure 40, mais représente le signal lorsqu'une plaque d'aluminium est glissée dans, puis retirée du champ de détection, au niveau du sol.

La figure 42 est semblable à la figure 40, mais représente le signal lorsqu'une main est glissée dans, puis retirée du champ de détection, à environ 1 m du sol.

La figure 43 montre l'évolution du signal fourni par un détecteur de mouvement avec antenne en guide d'ondes à fentes fixé à la partie supérieure d'un vantail d'une porte-tambour, dans le cas où aucun obstacle n'est présent dans le champ de détection, et dans le cas où une main se trouve introduite dans, puis retirée du champ de détection.

### Description détaillée

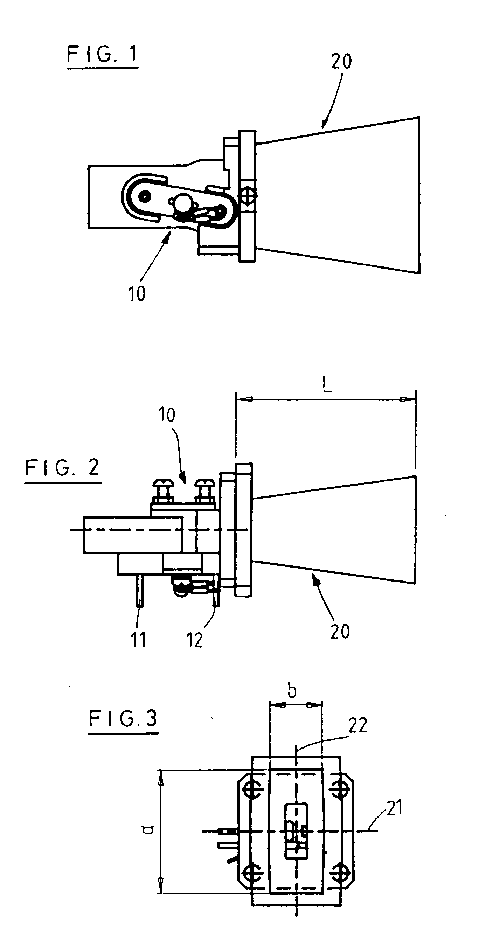

Ainsi qu'il est connu en soi (par exemple par FR-A-2160274), un détecteur de mouvement hyperfréquence à effet Doppler se compose classiquement d'une partie hyperfréquence proprement dite, comprenant un module d'émission-réception et une antenne, ainsi que d'un circuit électronique assurant l'alimentation du détecteur et le traitement du signal Doppler. La figure 1 est une vue schématique de la partie hyperfréquence d'un détecteur du type précité : on distingue le module d'émission-réception 10 et une antenne cornet 20. La figure 2 est une vue similaire après rotation de l'ensemble de 90° autour de son axe longitudinal. La figure 3 représente une vue frontale de l'ensemble.

Le module d'émission-réception, connu en soi, est par exemple constitué (figure 2) d'une cavité résonante dans laquelle une diode Gunn 11 correctement alimentée, génère un signal hyperfréquence qui se trouve rayonné dans l'espace grâce à l'antenne 20. Le module travaille par exemple à une fréquence de 24.125 GHz (bande K). Il va de soi que la description qui suit est valable pour d'autres fréquences. Seules les dimensions des différents éléments constitutifs de cette partie hyperfréquence sont dépendantes de la fréquence de l'émetteur-récepteur. Le cornet de l'antenne 20 rayonne dans les deux plans contenant ses axes de symétrie 21 et 22. Tout obstacle en mouvement relatif dans le champ d'action du détecteur réfléchit une partie de l'onde incidente et l'onde ainsi réfléchie se trouve captée par l'antenne 20 et mélangée avec l'onde incidente grâce à une diode Schottky 12 correctement placée dans la portion de guide d'onde située entre la cavité résonante comprenant la diode Gunn 11 et l'antenne 20. En conséquence, et en raison de l'effet Doppler, un signal basse fréquence est disponible aux bornes de la diode Schottky 12. La fréquence du signal Doppler est proportionnelle à la vitesse relative de l'obstacle détecté et son amplitude est proportionnelle à la taille et à la proximité de l'obstacle détecté. En l'absence de cible en mouvement dans le champ de détection du détecteur, le signal aux bornes de la diode Schottky 12 est un signal de bruit d'amplitude pratiquement nulle.

Revenant à l'exemple représenté sur la figure 1, le signal Doppler disponible aux bornes de la diode Schottky 12 est injecté dans un circuit électronique de détection (non représenté) capable de produire un signal actif pour commander l'automatisme qui commande un dispositif automatique, par exemple une porte automatique, lorsqu'une personne ou un objet en mouvement a été détecté dans le champ de détection.

Classiquement le détecteur de mouvement hyperfréquence à effet Doppler, destiné en l'occurrence à fournir un signal de détection à la porte automatique par exemple, se place à la partie supérieure de celle-ci et émet le signal hyperfréquence de haut en bas selon un angle déterminé.

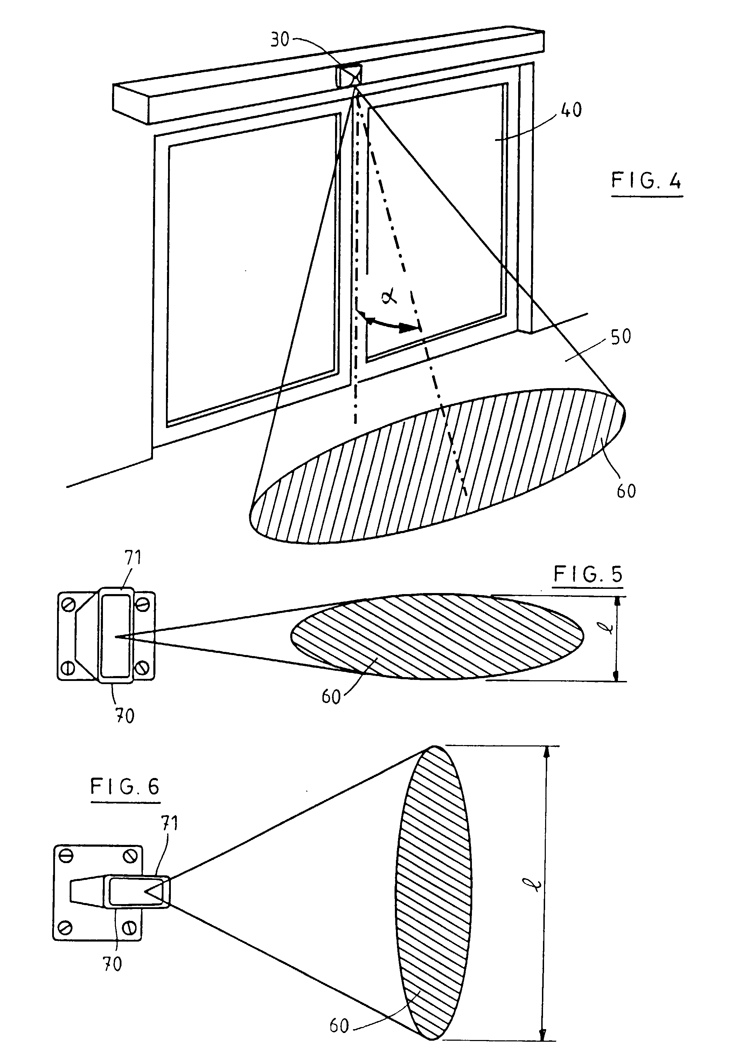

La portion d'espace située devant le détecteur et dans laquelle toute personne ou objet en mouvement peut être détecté constitue ce qu'on appelle généralement le lobe de détection. La figure 4 montre le lobe de détection d'un détecteur 30 associé à une porte automatique coulissante 40. Il se présente sous la forme d'un cône oblique 50 dont la base 60, hachurée au niveau du sol, est de forme ellipsoïdale. L'axe de ce cône forme avec la verticale un angle α déterminé. La forme et la taille du lobe de détection sont imposées par les dimensions de l'antenne et par la sensibilité du circuit électronique de détection.

Les figures 5 et 6 illustrent des lobes de détection 60 émis par une antenne cornet. Les caractéristiques de rayonnement d'une antenne cornet sont telles que, plus les parois opposées 70 et 71 de l'antenne sont rapprochées, plus la largeur 1 du lobe 60 correspondant est grande, et vice versa. On voit donc qu'il est simple, à partir d'une même antenne de section rectangulaire, de générer un lobe de détection 60 étroit et profond (comme illustré sur la figure 5) ou au contraire, un lobe de détection 60 large et peu profond (comme illustré sur la figure 6). Il suffit pour cela de faire effectuer à la partie hyperfréquence du détecteur, voire au détecteur lui-même, une rotation de 90°, de façon à présenter l'antenne avec ses parois opposées 70 et 71 rapprochées l'une de l'autre pour développer un lobe 60 large (figure 6) ou avec ses parois opposées 70 et 71 écartées l'une de l'autre pour développer un lobe 60 étroit (figure 5).

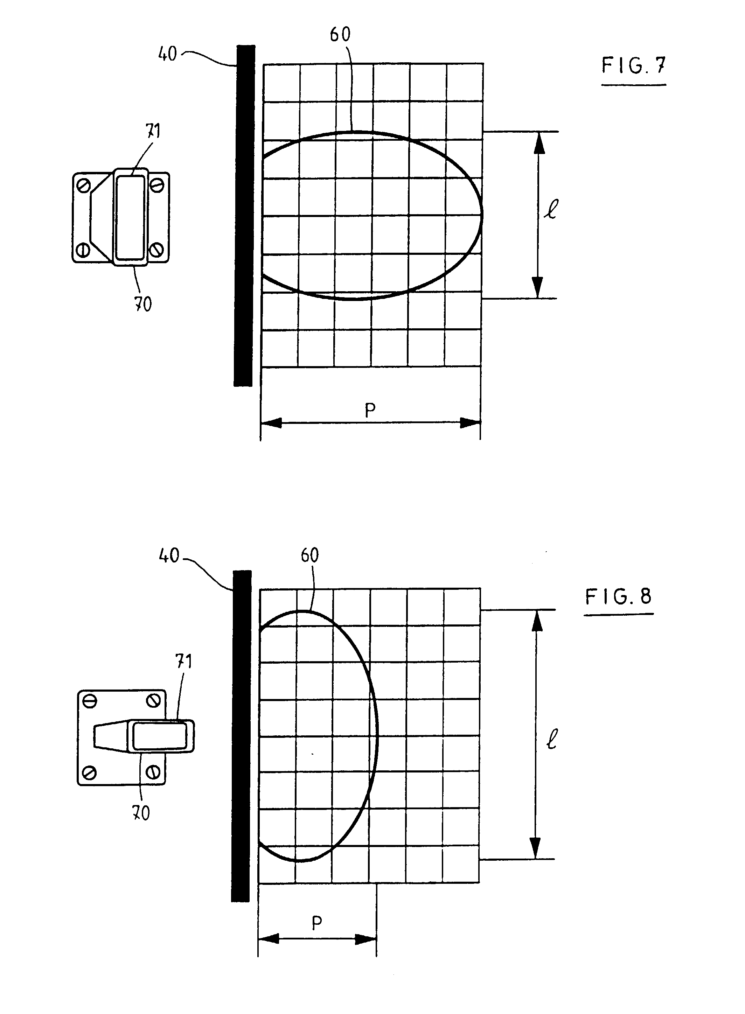

Dans la pratique, il est commode de représenter le lobe de détection aux abords d'une porte automatique par une vue en plan correspondant à l'intersection du lobe de détection par le plan du sol. La courbe tracée est de forme pratiquement ellipsoïdale, comme représenté sur les figures 7 et 8. On y retrouve à titre d'exemple la vue en plan 40 d'une porte coulissante, et les lobes au sol 60 pour deux orientations de l'antenne. Les figures 7 et 8 correspondent à un détecteur de mouvement hyperfréquence travaillant à une fréquence de 24.125 GHz, muni d'une antenne cornet dont les dimensions (voir figures 2 et 3) sont a = 21 mm, b = 7 mm et L = 32 mm, ce qui correspond à un gain d'antenne d'environ 10 dB. Le détecteur est placé à une hauteur de 2,20 m au-dessus du sol. La figure 7 correspond au cas où l'antenne se présente avec ses parois opposées 70 et 71 éloignées l'une de l'autre, ce qui lui permet de développer un lobe étroit, par exemple de 2,20 m de large et de 3 m de profondeur. La figure 8 correspond au cas où l'antenne se présente avec ses parois opposées 70 et 71 rapprochées l'une de l'autre, ce qui lui permet de développer un lobe large, par exemple de 3,40 m de large et de 1,60 m de profondeur.

Les considérations dimensionnelles relatives aux lobes de détection développés par les détecteurs de mouvement hyperfréquences à effet Doppler s'appliquent également aux détecteurs hyperfréquences capables de détecter, outre le mouvement, la présence de personnes ou d'objets immobiles dans leur champ de détection. Dans ce cas, le traitement du signal est fondamentalement différent du traitement du signal Doppler décrit ci-dessus, mais ce qui a été dit concernant les lobes développés par les antennes cornet reste valable dans ce cas d'application.

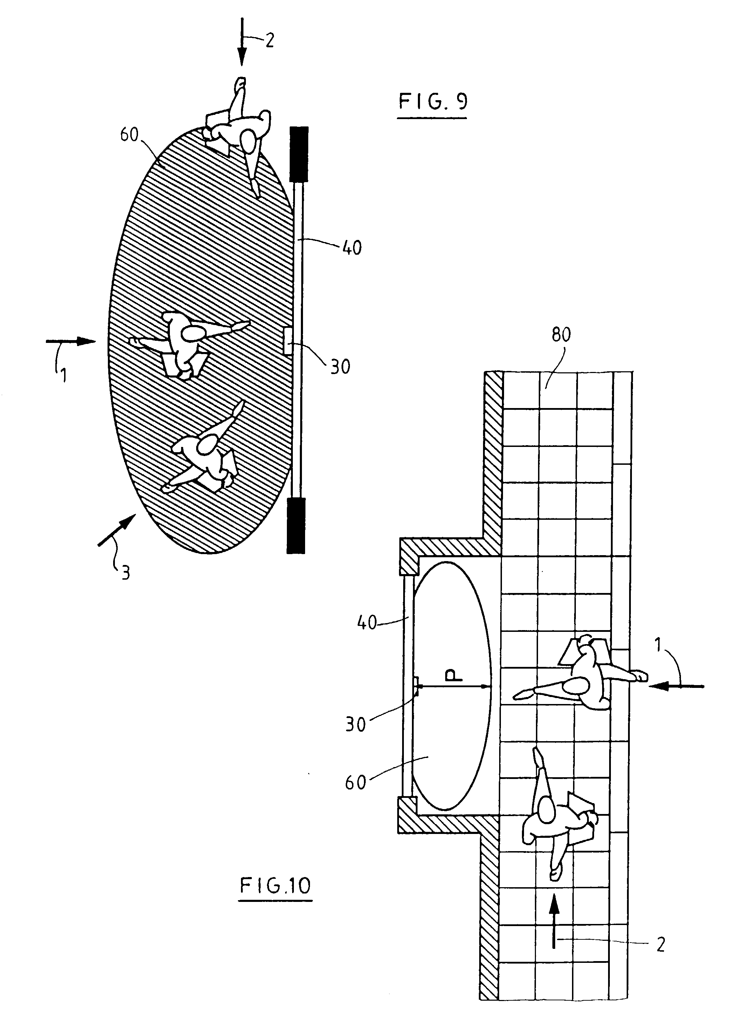

Le processus de détection entraîne que toute personne ou tout objet en mouvement soit détecté quel que soit son angle d'approche par rapport au détecteur, comme illustré sur la figure 9, où l'on retrouve une vue en coupe transversale d'une porte automatique coulissante 40, équipée d'un détecteur 30 développant un lobe de détection 60. Le piéton 1, abordant la porte perpendiculairement, est aussi bien détecté que le piéton 2 qui évolue parallèlement à la porte, et que le piéton 3 qui aborde la porte obliquement. Pour une porte automatique située devant un espace bien dégagé, ce mode de détection est bien approprié et conduit à une ouverture efficace de la porte.

Un certain nombre de cas d'application imposent cependant que le lobe de détection développé par le détecteur soit relativement peu profond. C'est par exemple le cas pour les détecteurs de mouvement hyperfréquence à effet Doppler destinés à commander une porte automatique 40 disposée le long d'un trottoir 80 ou d'une galerie commerciale. La figure 10 illustre le cas d'un trafic incessant de piétons devant un détecteur 30. Le passage de piétons tels que 2, déambulant le long du trottoir sans intention de passer par la porte, ne doit pas provoquer l'ouverture de celle-ci, tandis que des piétons tels que 1 doivent être détectés. Une solution à ce problème consiste à mettre en oeuvre un détecteur 30 développant un lobe 60 large mais de profondeur réduite et généralement compris dans l'espace séparant la porte du trottoir proprement dit. Une solution meilleure consisterait à doter le détecteur d'une fonction supplémentaire le rendant insensible à tout mouvement parallèle au plan de la porte, mais cela augmenterait les coûts.

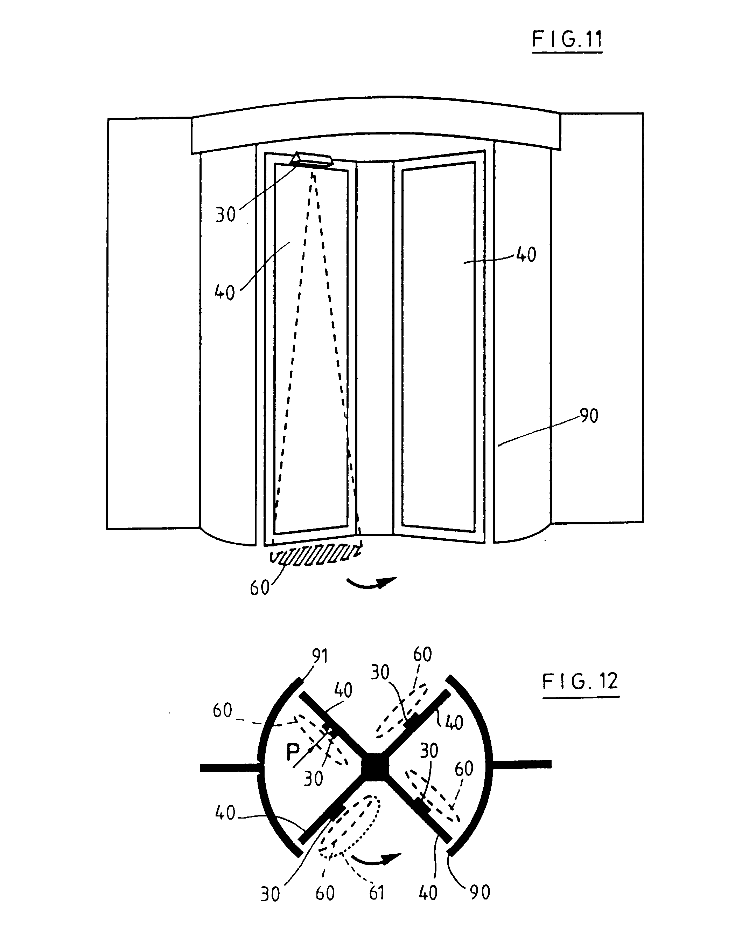

C'est également le cas pour les détecteurs hyperfréquences destinés à assurer la protection des personnes devant les vantaux mobiles d'une porte-tambour, comme illustré aux figures 11 et 12. Le détecteur 30 est fixé à la partie supérieure d'un vantail 40 et il dirige son lobe de détection 60 de haut en bas. Le processus de détection doit entraîner le ralentissement, voire l'arrêt, de la porte-tambour lorsqu'une personne se déplace dans celle-ci à une vitesse inférieure à la vitesse tangentielle du vantail, et qu'elle est sur le point d'être rattrapée et heurtée par le vantail qu'elle précède, avec des conséquences qui peuvent être dommageables. Comme le détecteur, fixé à chaque vantail, accompagne celui-ci dans son mouvement de rotation, il est souhaitable que la profondeur du lobe de détection, mesurée au niveau du sol, soit relativement réduite. Ceci permet d'une part de ne pas détecter les personnes avançant à allure normale dans les secteurs de la porte-tambour, et d'autre part de ne pas détecter des obstacles non significatifs. Ainsi, comme on peut le voir à la figure 12, un détecteur développant un lobe de détection plus profond, tel que 61, entraînerait la détection non souhaitée des bords fixes notés 90, 91 de l'enveloppe extérieure de la porte-tambour.

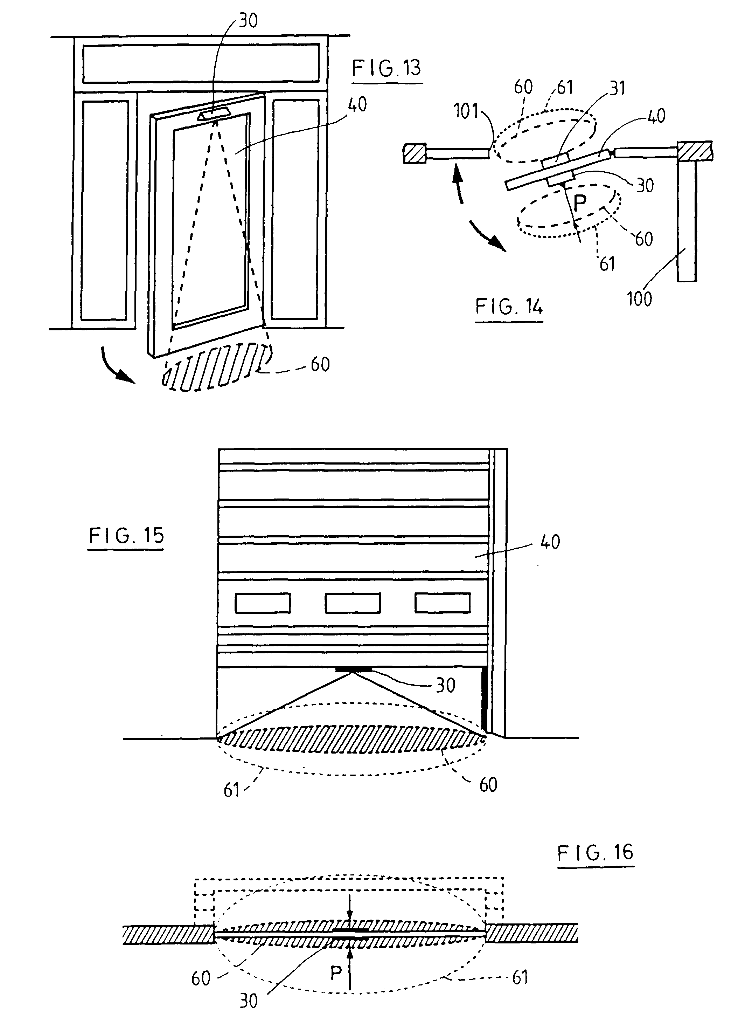

Un cas fort similaire au précédent est celui des détecteurs hyperfréquences destinés à assurer la protection de personnes devant ou derrière le vantail mobile d'une porte pivotante, comme illustré aux figures 13 et 14. Le détecteur 30 est fixé à la partie supérieure du vantail 40 et il dirige son lobe de détection 60 de haut en bas. Le processus de détection doit entraîner le ralentissement, voire l'arrêt de la porte pivotante lorsqu'une personne se déplace à proximité alors que le vantail est en mouvement et susceptible de heurter la personne avec des conséquences dommageables. Comme le détecteur, fixé au vantail mobile, accompagne celui-ci dans son mouvement de rotation, il est souhaitable que la profondeur du lobe de détection, mesurée au niveau du sol, soit relativement réduite afin de ne pas détecter des obstacles non significatifs. Ainsi, comme illustré à la figure 14, le détecteur 30 développant un lobe de détection plus profond, tel que 61, entraînerait la détection non souhaitée d'un mur 100 alors que la porte se trouve encore en phase d'ouverture, ou, pour un détecteur 31 situé de l'autre côté de la porte, et développant également un lobe plus profond, tel que 61, la détection non souhaitée d'un montant fixe de la porte tel que 101.

Un autre cas encore nécessitant l'emploi d'un détecteur présentant un lobe de détection peu profond est relatif à la protection du bord inférieur horizontal d'une porte-volet roulante. Une porte-volet roulante ou porte sectionnelle se présente sous la forme d'un volet, constitué de sections articulées l'une à l'autre, se déplaçant verticalement par translation dans des guides latéraux, et s'enroulant à sa partie supérieure à la manière d'un volet, comme illustré sur la figure 15. La partie dangereuse de ce genre de porte est le bord inférieur de celle-ci. Au cours du mouvement de descente de la porte, son bord inférieur peut heurter et éventuellement blesser une personne stationnant en dessous. De même, un objet abandonné dans le rayon d'action de la porte peut être endommagé par celle-ci. La protection de cette zone dangereuse peut être réalisée par un détecteur 30 fixé sous le bord de la porte-volet roulante 40 et dirigeant son lobe de détection 60 de haut en bas. Le processus de détection doit entraîner le ralentissement, voire l'arrêt, de la porte-volet roulante en cas de danger. Comme le détecteur, fixé à la porte mobile, accompagne celle-ci dans son mouvement de translation, il est souhaitable que la profondeur du lobe de détection, mesurée au niveau du sol, soit relativement réduite, afin de ne pas détecter des obstacles non significatifs. Ainsi, comme l'illustrent les figures 15 et 16, le détecteur 30 développant un lobe de détection plus profond, tel que 61, entraînerait par exemple la détection non souhaitée d'objets ou de véhicules présents à proximité de la porte, sans risque pour ceux-ci d'être heurtés, et entraînerait un arrêt intempestif et non justifié de la porte.

La liste des exemples d'utilisation de détecteurs présentant un lobe étroit n'est évidemment pas limitative et n'est pas restreinte au domaine de la porte automatique. Toute application similaire est à considérer comme faisant partie du contexte de l'invention qui sera exposée plus loin.

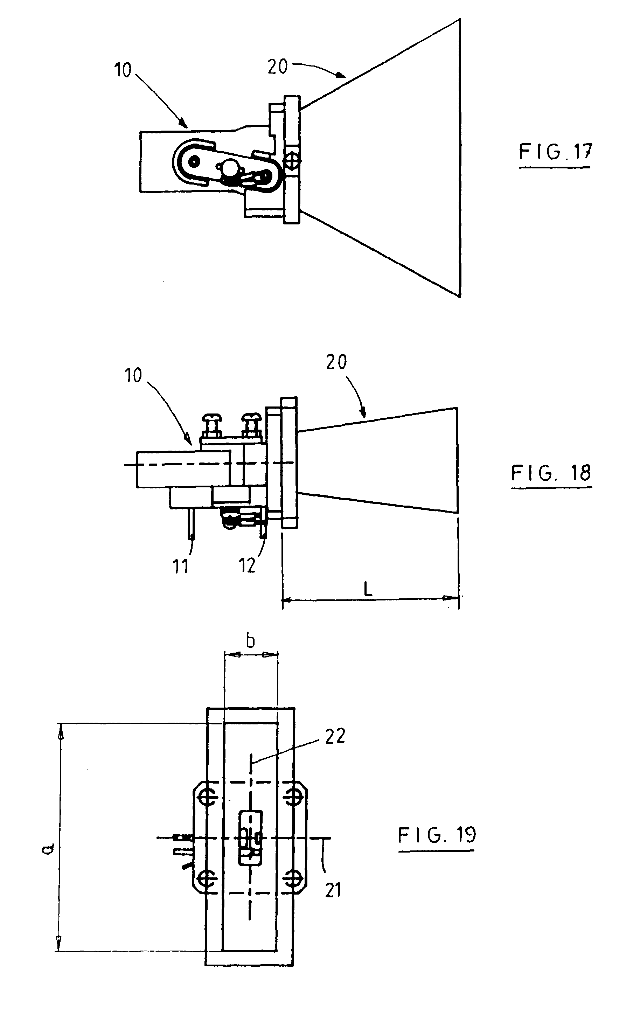

La technologie des antennes cornet permet de résoudre partiellement le problème de la détection dans un lobe de faible profondeur. En effet, les dimensions du lobe de détection dépendent fortement du rapport des dimensions de la section rectangulaire de l'antenne cornet. En outre, plus les parois opposées sont éloignées, plus le lobe correspondant est étroit, et vice versa. L'antenne 20 représentée aux figures 17 à 19, et dont les dimensions sont, par exemple, a = 50 mm, b = 9 mm et L = 36 mm permet, suivant son orientation, de développer un lobe large et peu profond, ou un lobe étroit et profond. Dans ce cas également, le module émetteur-récepteur 10 travaille, par exemple, à une fréquence de 24.125 GHz. Le gain de ladite antenne est de l'ordre de 13 dB.

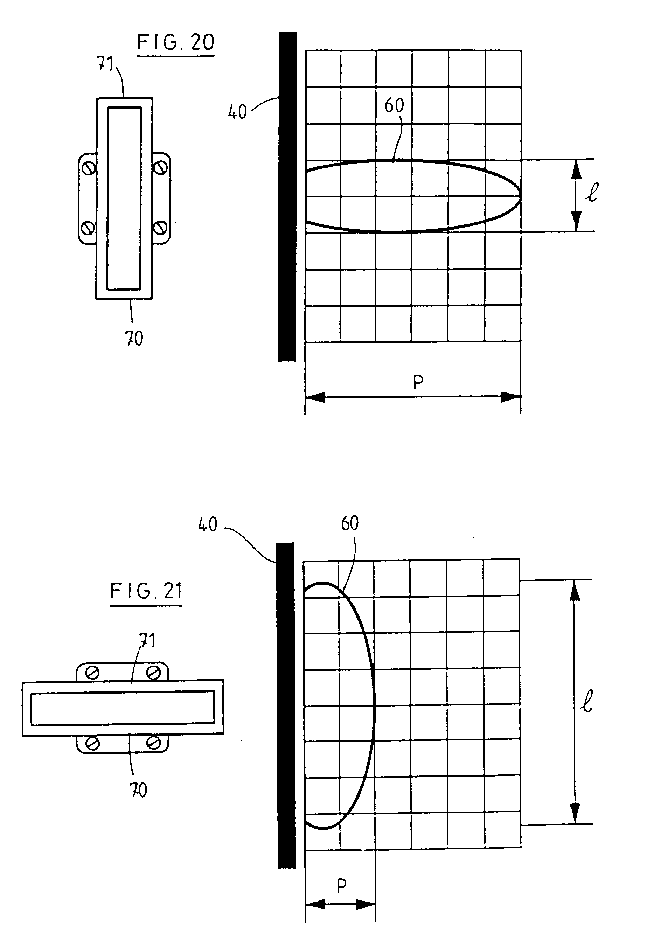

Les figures 20 et 21 montrent les lobes de détection classiques aux abords d'une porte coulissante automatique tels qu'ils sont projetés par une antenne cornet. Le détecteur est placé à une hauteur de 2,20 m au-dessus du sol. La figure 20 correspond au cas où l'antenne se présente avec ses parois opposées 70 et 71 éloignées l'une de l'autre, ce qui lui permet de développer un lobe étroit, 1 m de large par exemple, et d'une profondeur de 3 m par exemple. La figure 21 correspond au cas où l'antenne se présente avec ses parois opposées 70 et 71 rapprochées l'une de l'autre, ce qui lui permet de développer un lobe large, de 3,4 m de large par exemple et de 1 m de profondeur.

On constate cependant que, dans le deuxième cas, le lobe n'est guère moins profond que 1 m. Ceci rend cette solution valable, dans certaines limites, pour résoudre le cas de la détection le long d'un trottoir ou d'une galerie commerciale, qui nécessite de préférence un lobe de détection très peu profond. Par contre, cette solution ne s'appliquerait pas de façon satisfaisante aux exemples illustrés par les figures 11 à 16. Un lobe de 1 m de profondeur entraînerait à coup sûr des détections intempestives. D'autre part, elle ne permet pas la discrimination de la direction et du sens de déplacement des mobiles détectés. Il en résulte que cette limitation pratique de la technologie des antennes cornet à des lobes ayant des dimensions non inférieures à 1 m de profondeur rend l'utilisation de détecteurs hyperfréquences conventionnels non appropriée dans bien des cas.

Comme cela a été dit plus haut, ce qui précède est également valable pour les détecteurs de présence hyperfréquences munis d'antennes cornet.

Il est certes actuellement possible de maîtriser, dans une certaine mesure, la détection en lobe étroit par d'autres technologies. La technologie de la détection infrarouge active, par exemple, procède par émission de radiations infrarouges dans un lobe de détection et par mesure du rayonnement diffus réfléchi par l'environnement ou par tout obstacle à détecter. Les détecteurs basés sur cette technologie présentent parfois l'avantage de détecter la présence de personnes ou d'objets immobiles. Munis de lentilles cylindriques de Fresnel correctement dimensionnées, ce genre de détecteur permet de détecter la présence et le mouvement d'une personne ou d'un objet dans un lobe de détection généralement large, mais de profondeur très réduite, par exemple inférieure à 30 cm, et constituant un rideau de détection ou de protection.

Se référant aux figures 10 à 14, il apparaît que les caractéristiques du rideau infrarouge conviennent parfaitement à ce genre d'application. Par contre, il n'en va pas de même pour la porte-volet roulante illustrée aux figures 15 et 16, étant donné que la portée utile des détecteurs infrarouges actifs est souvent limitée à 2,50 m, alors que les portes-volets roulantes ont des hauteurs généralement supérieures à 3 m, atteignant souvent 5 m.

D'autre part, il est bien connu que les détecteurs optoélectroniques infrarouges actifs présentent un certain nombre d'imperfections inhérentes à leur technologie. Il s'agit notamment d'une certaine sensibilité à la nature, à la couleur et au pouvoir réfléchissant de l'arrière-plan qu'ils couvrent, c'est-à-dire aux contrastes de l'environnement qui, s'il est fluctuant, peut entraîner bon nombre de détections parasites. Seul un traitement de signal approprié permet d'affranchir ces détecteurs de ces imperfections, mais cela au prix d'une certaine complexité.

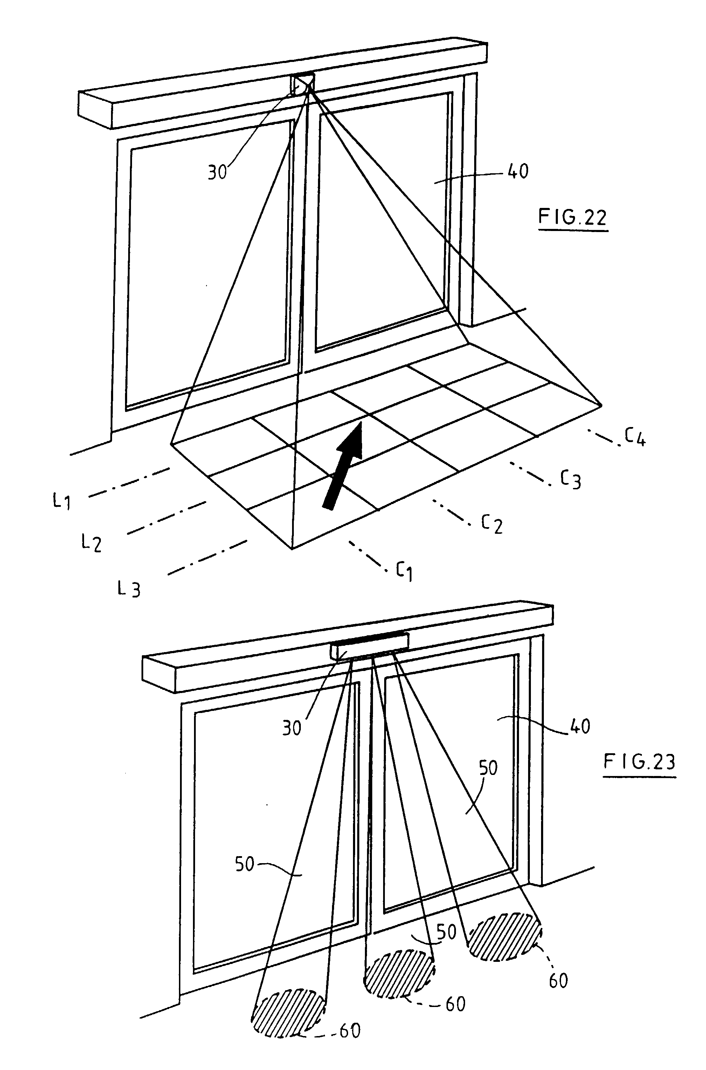

Il convient de signaler qu'une variante connue à la technique de détection infrarouge active permet de doter le détecteur d'une fonction de prise en compte de l'angle d'approche du mobile dans le champ de détection. Ceci constitue un avantage dans la situation illustrée à la figure 10, où les piétons circulant le long du trottoir (donc parallèlement au plan de la porte) sans intention d'entrer, ne doivent pas être détectés. Cette technique consiste à émettre des radiations infrarouges dans un réseau matriciel d'émetteurs discrets, par exemple trois lignes de quatre colonnes, notées L1, L2, L3 et C1 à C4 à la figure 22. Le détecteur 30 est alors placé par exemple devant une porte automatique coulissante 40. Les émetteurs sont rendus successivement actifs par balayage horizontal, L1-C1, L1-C2, ..., L3-C4, tandis que les radiations sont réfléchies par l'environnement dans un réseau matriciel de récepteurs discrets synchronisés sur les émetteurs correspondants. Un traitement de signal, apparenté au traitement d'images, permet d'extraire des informations sur la direction et le sens de déplacement du mobile détecté, représenté par la flèche à la figure 22. Ce traitement est cependant relativement complexe et les détecteurs basés sur cette technique sont coûteux. De plus, il sont affectés des imperfections inhérentes à la technologie infrarouge active.

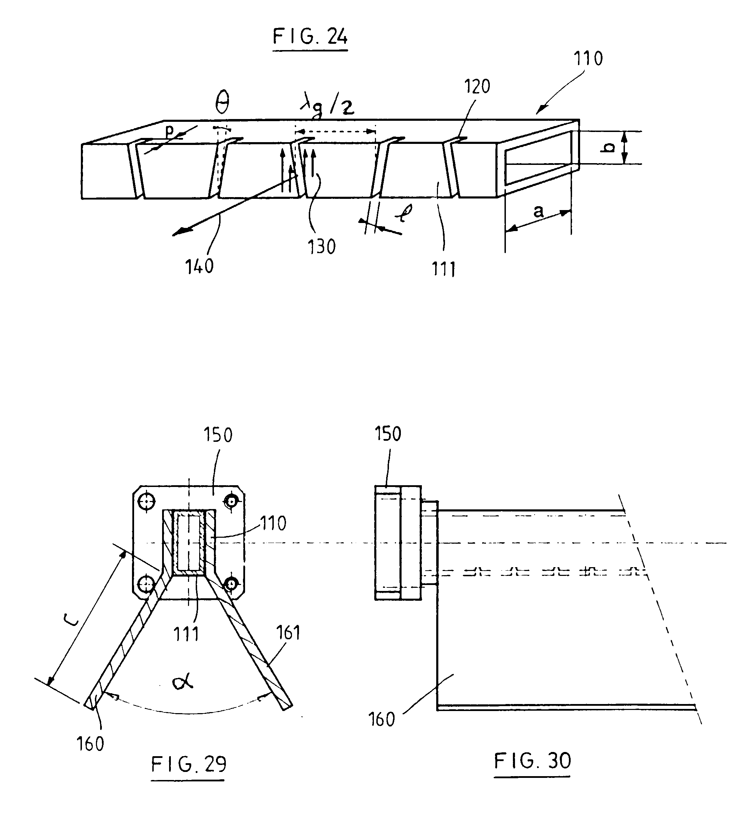

Enfin, la technique de détection de présence - et a fortiori de mouvement - par la mesure du temps de propagation des ondes ultrasonores pourrait convenir dans certains des cas d'applications précités. Les détecteurs à ultrasons présentent cependant certains inconvénients, notamment les détections indésirables dues à la modification de la sensibilité du détecteur en fonction des conditions climatiques (température, humidité), sensibilité aux courants d'air, sensibilité aux vibrations et aux bruits mécaniques, absence de détection pour des cibles non orthogonales ou recouvertes de matériaux absorbants tels que laine ou tissu, ces situations étant courantes dans l'environnement d'une porte automatique. Le lobe de détection 60 au niveau du sol d'un tel détecteur est généralement circulaire avec un diamètre assez réduit de l'ordre de 50 cm, comme illustré sur la figure 23. Un détecteur multiple 30 est alors monté au-dessus de la porte automatique 40, et il dirige ses faisceaux ultrasonores 50 de haut en bas.

La faible dimension d'un lobe est favorable aux cas d'application illustrés aux figures 10 à 16 pour ce qui est de la profondeur des lobes, mais elle est non appropriée en ce qui concerne la largeur du lobe, qui est circulaire. Il est donc nécessaire, dans la plupart des cas, d'utiliser plusieurs détecteurs simultanément, comme illustré sur la figure 23, afin d'étendre la couverture latérale. Cela grève bien évidemment le prix de l'installation. En outre, la technique ne se prête guère à la prise en compte de la composante angulaire du mouvement du mobile détecté.

De plus, dans les applications où le détecteur se déplace avec la porte ou un élément mobile, les vibrations engendrées par ce mouvement ne peuvent que rendre la détection peu fiable.

Une solution au problème de la détection dans un lobe de profondeur réduite, consiste à exploiter la technologie des hyperfréquences et de tirer parti des propriétés d'une antenne rayonnante allongée présentant plusieurs éléments rayonnants répartis sur la longueur de l'antenne et disposés de manière que chacun d'eux rayonne dans un plan pratiquement perpendiculaire à la direction longitudinale de l'antenne. Les propriétés de rayonnement des antennes rayonnantes à fentes sont divulguées notamment par EP-A-0440126.

Un exemple de réalisation d'une antenne rayonnante allongée est constitué par une antenne en guide d'ondes à fentes rayonnantes comme illustré par exemple à la figure 24. Cette antenne est constituée d'un guide d'ondes rectangulaire 110. Les dimensions a et b de celui-ci sont une fonction de la fréquence de l'onde transmise, et l'une des faces 111, généralement la plus étroite, est percée de fentes 120 équidistantes, au travers desquelles l'énergie électromagnétique est rayonnée. L'onde transmise dans le guide et rayonnée par les fentes 120 est générée à une des extrémités du guide d'ondes par un émetteur approprié (non représenté à la figure 24). Les fentes 120 sont espacées régulièrement d'une distance égale à λg/2, où λg est la longueur d'onde de l'onde transmise dans le guide d'ondes. De plus, les fentes sont inclinées alternativement d'un angle θ dans un sens et dans le sens opposé, ceci afin que toutes les fentes rayonnent en phase.

La présence de fentes 120 inclinées dans le petit côté du guide 111 interrompt les courants superficiels 130 prenant naissance dans les parois du guide suite à la propagation de l'onde dans le guide. Ceci génère un champ électromagnétique transversal, dont la propagation s'effectue dans une direction privilégiée 140 perpendiculaire au petit côté du guide d'ondes. Pour une antenne émettant un rayonnement électromagnétique à une fréquence de 24.125 GHz, les dimensions normalisées du guide sont a = 10,668 mm et b = 4,318 mm. A la fréquence choisie, la longueur d'onde dans le guide est de 15,303 mm, ce qui correspond à un écartement entre les fentes de 7,65 mm. Les fentes ont par exemple une largeur 1 = 1 mm, leur profondeur p est de 1,50 mm, tandis qu'elles sont inclinées d'un angle de θ = 5° par rapport à la verticale.

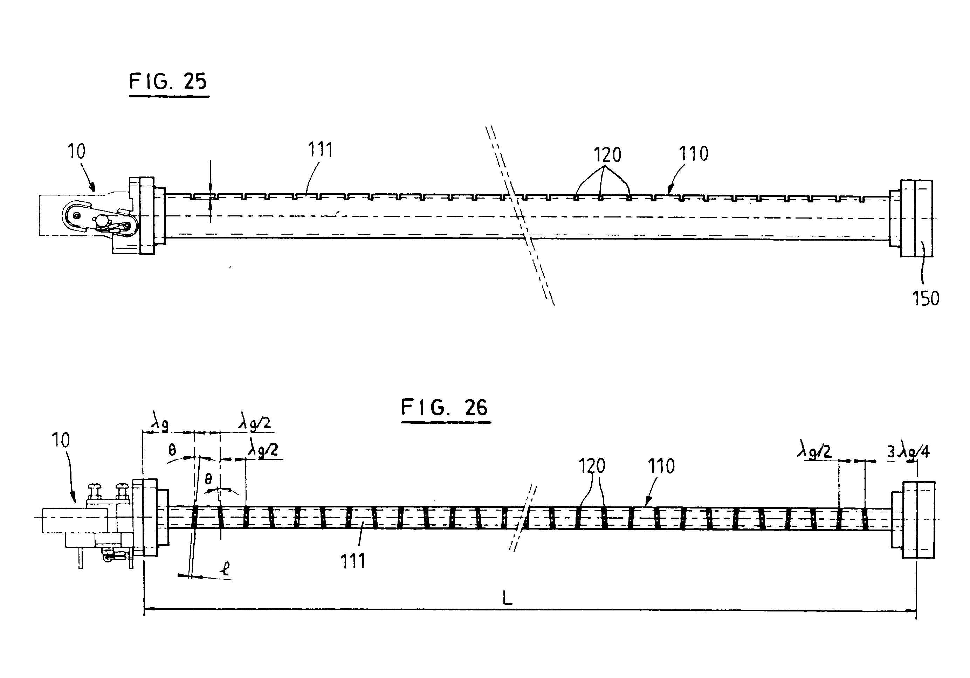

Dans un exemple de réalisation, illustré sur les figures 25 et 26, une extrémité du guide d'ondes est alimentée par un émetteur-récepteur 10, situé à une distance égale à λg de la première fente et dont le principe de fonctionnement a été décrit précédemment et illustré sur les figures 1 à 3. L'autre extrémité se termine sur une charge adaptée 150, constituée par exemple d'un absorbant situé à 3.λg/4 de la dernière fente. L'adaptation de la charge terminale permet d'assurer une répartition de la puissance rayonnée le long du guide la plus uniforme possible. D'autres modes de réalisation de la charge terminale adaptée sont possibles. Il en va de même pour toute variante selon laquelle les fentes rayonnantes sont pratiquées dans le grand côté du guide d'ondes. Une charge adaptée a déjà été utilisée en bout d'un guide d'ondes (voir EP-A-0109552) mais il s'agissait là d'un guide d'ondes sur lequel des antennes étaient fixées à intervalles réguliers et non pas d'un guide d'ondes à fentes.

L'antenne en guide d'ondes à fentes a une longueur dépendant de la fréquence émise et du nombre de fentes pratiquées dans le petit côté 111 du guide. A titre d'exemple, une antenne travaillant à 24.125 GHz et comptant quatre-vingt-dix fentes a une longueur L = 707,6 mm (voir figures 25 et 26). Cependant, des longueurs plus importantes, de l'ordre de plusieurs mètres, sont parfaitement possibles à réaliser.

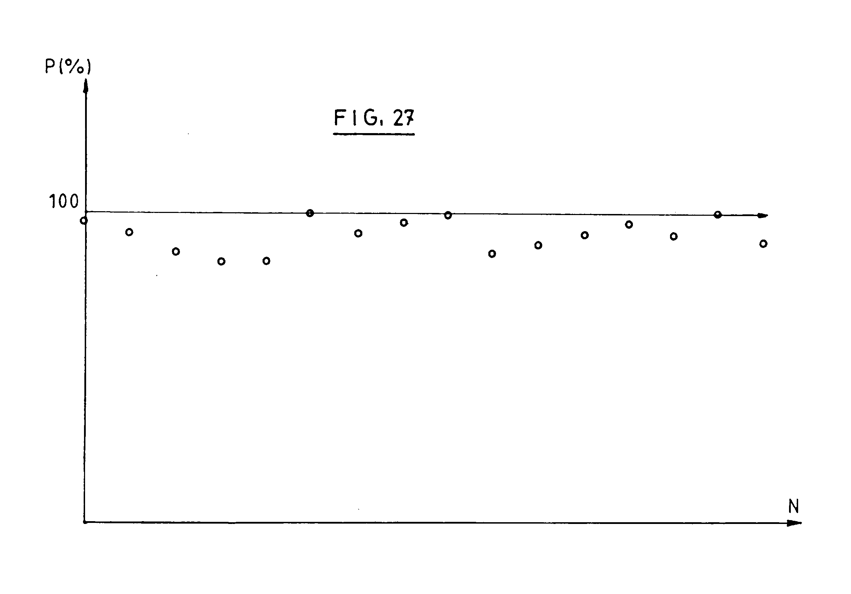

La figure 27 représente, en échelle relative, la répartition de puissance P le long d'une antenne de 1,50 m de long, avec le nombre N de fentes, par exemple quatre-vingt-dix fentes, représentées en abscisse. On constate que la charge adaptée permet d'obtenir un lobe de très bonne uniformité longitudinale. Il en résulte qu'une première condition permettant l'application des antennes en guides à fentes à des détecteurs développant des lobes de détection larges et peu profonds est réalisée. En effet, il est apparu des applications illustrées aux figures 11 à 16, que le lobe développé par le détecteur doit être le plus uniforme possible dans le sens de la largeur, c'est-à-dire parallèlement au plan de la porte automatique.

Dans le cas d'une antenne en guide d'ondes à fentes de grande longueur (p.ex. > 1 m), il est parfaitement possible d'optimiser la répartition de la puissance rayonnée le long du guide d'ondes en augmentant l'inclinaison θ des fentes en fonction de leur éloignement par rapport à l'émetteur-récepteur 10. Cette modification de l'inclinaison θ des fentes peut bien entendu s'effectuer par groupes de fentes : ainsi, les n₁ premières fentes peuvent par exemple avoir une inclinaison θ₁, les n₂ fentes suivantes avoir une inclinaison θ₂, avec θ₂ > θ₁, et ainsi de suite, de façon à uniformiser la puissance le long de l'antenne.

La seconde condition à réaliser par l'antenne en guide d'ondes à fentes est de développer un lobe d'ouverture angulaire très étroite, dans un plan perpendiculaire à l'axe du guide.

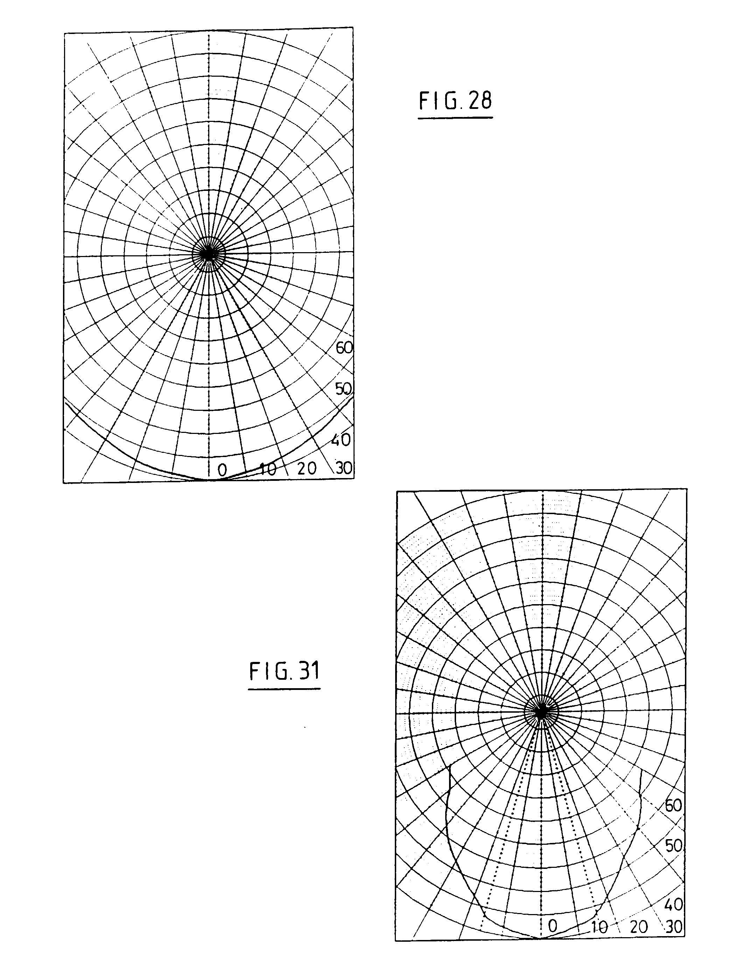

La figure 28 montre le diagramme polaire de rayonnement de l'antenne illustrée sur les figures 25 et 26. L'antenne en guide d'ondes à fentes est supposée perpendiculaire au plan du diagramme, à l'origine des coordonnées, avec des fentes rayonnant vers le bas. On constate d'après les mesures effectuées que l'antenne rayonne de façon quasi isotropique, ce qui rend la production d'un lobe étroit impossible. En effet, l'ouverture conventionnelle à - 3 dB du lobe de rayonnement mesuré est de 2 x 30°. Dans ces conditions, et selon la sensibilité du détecteur, la profondeur théorique du lobe de détection pour une hauteur de détection de 2 m pourrait atteindre une valeur de 2 m.

Afin de réduire l'angle d'ouverture du lobe rayonné dans un plan perpendiculaire au guide d'ondes on peut prévoir l'emploi de réflecteurs correctement dimensionnés. Ces réflecteurs se présentent par exemple sous la forme de plaques métalliques 160 et 161, solidaires des grands côtés du guide d'onde, comme illustré sur les figures 29 et 30, et forment entre eux un angle a englobant le petit côté 111 du guide d'ondes percé de fentes. Les réflecteurs métalliques 160 et 161 peuvent être confectionnés à partir de plaques de cuivre ou de laiton pliées de manière à former entre elles l'angle α, et être soudées sur les grands côtés du guide d'ondes 110.

La figure 30 représente une vue latérale de l'antenne en guide d'ondes à fentes représentée sur les figures 25 et 26, mais munie des réflecteurs 160, 161 précités. Ceux-ci ont un angle d'ouverture α de 53,4° par exemple et leur largeur C est de 30 mm. Grâce à ces réflecteurs, qui jouent pratiquement le rôle des parois opposées 70, 71 de l'antenne cornet illustrée sur les figures 5 et 6, l'ouverture angulaire du lobe, dans un plan perpendiculaire à l'axe du guide, est fortement réduite comme le montre le diagramme polaire de rayonnement de la figure 31. On y constate que l'ouverture conventionnelle à -3 dB du lobe de rayonnement mesuré se trouve réduite à 2 x 10°. Dans ces conditions, et selon la sensibilité du détecteur, la profondeur théorique du lobe de détection pour une hauteur de détection de 2 m est inférieure à 0,50 m, ce qui correspond bien aux objectifs souhaités pour les applications illustrées aux figures 11 à 16.

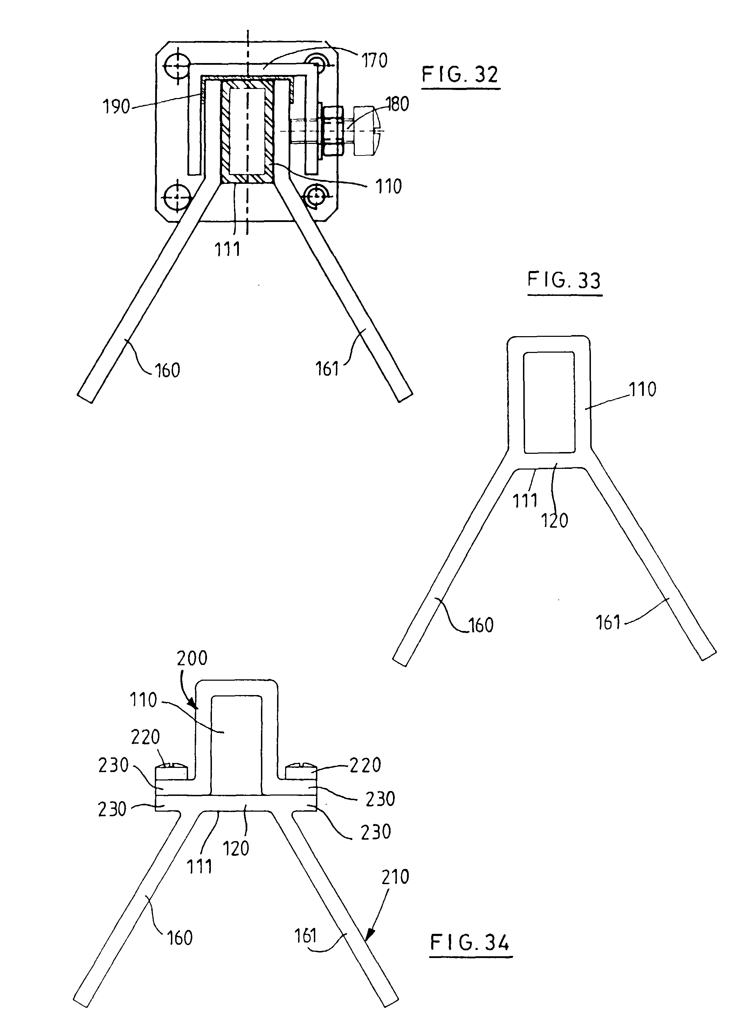

Un autre mode de réalisation et de fixation de réflecteurs consiste à fixer les plaques métalliques de part et d'autre du guide d'ondes grâce au système de pinçage illustré à la figure 32. Un profilé en U, noté 170, serre les deux parties des réflecteurs 160 et 161 contre les grands côtés du guide d'ondes 110. La fixation s'effectue, par exemple, par des vis de pression 180, réparties régulièrement le long du guide d'ondes. Afin d'assurer une bonne continuité électrique entre le guide d'ondes 110 et chacun des réflecteurs 160 et 161, on peut utiliser un autocollant conducteur tel que 190, ou tout autre moyen classique tel que colle ou pâte conductrice.

Dans un autre mode de réalisation illustré à la figure 33, le guide d'ondes 110 et les réflecteurs 160 et 161 sont formés en une seule pièce en aluminium extrudé par exemple. Les fentes 120 (non visibles sur le dessin) sont réalisées, par exemple, par découpe à l'aide d'un outillage particulier, ou par usinage.

Etant donné les faibles dimensions de l'antenne en guide d'ondes à fentes avec réflecteurs, il peut être intéressant, afin de donner une meilleure accessibilité à l'outillage de découpe des fentes, de réaliser ce profilé d'aluminium extrudé en deux parties notées 200 et 210 à la figure 34. La partie 200 correspond au guide d'ondes 110 proprement dit, tandis que la partie 210 correspond aux réflecteurs 160, 161. Etant semiouvert, le profilé 210 se prête plus facilement à la découpe des fentes 120, non représentées sur la figure. Les deux parties 200 et 210 de ce mode de réalisation sont fixées l'une à l'autre par exemple au moyen de vis autoforantes 220 disposées régulièrement le long du guide d'ondes et vissées dans des brides de fixation 230. La continuité électrique peut être assurée par les moyens 190 précités, tels que ruban autocollant conducteur, colle ou pâte conductrice.

A la figure 34, les brides de fixation 230 ont été représentées au niveau du plan contenant les fentes 120. Ces brides 230 peuvent se situer à un niveau quelconque le long des grands côtés du guide d'ondes 110. D'autres modes de fixation des deux parties 200 et 210 de l'antenne extrudée en guide d'ondes à fentes (par exemple soudage, collage, sertissage, rainurage) sont à considérer comme faisant partie de l'invention.

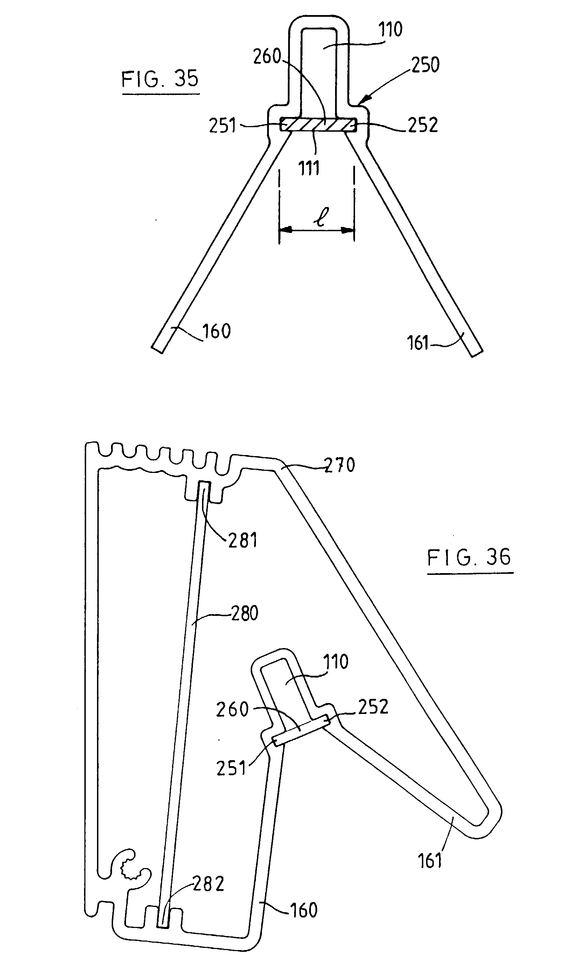

Un mode de réalisation particulièrement intéressant de l'antenne en guide d'ondes à fentes munie de réflecteurs consiste à réaliser ce dispositif en deux parties agencées comme décrit ci-dessous et en référence à la figure 35. La première partie, notée 250, est constituée d'un profilé d'aluminium extrudé semi-ouvert, dont le fond 110 joue le rôle d'une partie de guide d'ondes et dont les côtés 160 et 161 jouent le rôle de réflecteurs. On remarque que deux rainures 251 et 252 se faisant face sont ménagées tout au long de la partie interne du profilé.

La seconde partie, notée 260, est constituée d'une languette métallique insérée dans les deux rainures 251 et 252. Cette languette jour le rôle de la face rayonnante 111 du guide d'ondes ainsi fermé, à condition que des rainures (non dessinées) soient prévues, ainsi qu'il a été dit plus haut. Cette solution présente l'avantage de simplifier l'usinage des fentes dans la languette 260, dans la mesure où cette opération peut être effectuée avant son insertion dans le profilé, ce qui assure une accessibilité optimale à l'outillage de découpe des fentes. Il est clair que, dans ce mode de réalisation, les fentes auront une longueur sensiblement inférieure à la largeur 1 de la languette. Il a été démontré que cela n'affectait en rien les caractéristiques du champ rayonné.

La languette 260 peut être confectionnée à partir d'un méplat métallique en cuivre ou en aluminium extrudé, par exemple. Une solution particulièrement avantageuse consiste à utiliser un substrat époxy recouvert d'une métallisation de cuivre, tel qu'utilisé couramment dans la fabrication des circuits imprimés. Dans ce cas, la réalisation des fentes rayonnantes peut se faire par photogravure, procédé particulièrement aisé à mettre en oeuvre, et qui conduit à une solution précise et peu coûteuse.

Dans le cas où l'angle d'inclinaison θ des fentes doit être prévu par groupes de fentes afin d'uniformiser la puissance rayonnante dans une antenne de grande longueur, cette variation peut être réalisée en enfilant dans les rainures 251 et 252 des languettes successives portant des fentes ayant un angle θ différent.

Enfin, on peut tirer avantageusement parti de l'utilisation de profilés en aluminium extrudé pour réaliser en une seule pièce, selon l'invention, le boîtier du détecteur, la partie principale du guide d'ondes et les réflecteurs : cela est illustré à la figure 36. Le boîtier du détecteur utilisant l'antenne en guide d'ondes à fentes est désigné en 270, la partie principale du guide d'ondes est notée 110 et les réflecteurs sont notés 160 et 161. Comme expliqué plus haut, la face rayonnante du guide d'ondes est constituée d'une languette 260 insérée dans les rainures 251, 252, ladite face étant percée de fentes, non représentées sur le dessin. L'intérêt de cette disposition est que le boîtier 270 ainsi constitué peut contenir d'autres organes nécessaires au fonctionnement du détecteur, comme par exemple un circuit imprimé 280, inséré dans des rainures longitudinales 281 et 282.

En résumé, dans un mode de réalisation particulier, le détecteur de mouvement ou de présence hyperfréquence est équipé d'une antenne en guide d'ondes à fentes, qui est correctement dimensionnée et munie d'une charge terminale appropriée afin de rendre la puissance rayonnée la plus constante possible parallèlement à l'axe du guide, et qui est dotée de réflecteurs disposés de manière à limiter l'ouverture angulaire du lobe rayonné. Ces dispositions permettent de produire un lobe de rayonnement souhaité dont la largeur est déifnie par le contexte de l'application, mais dont la profondeur doit être réduite à 0,50 m ou moins.

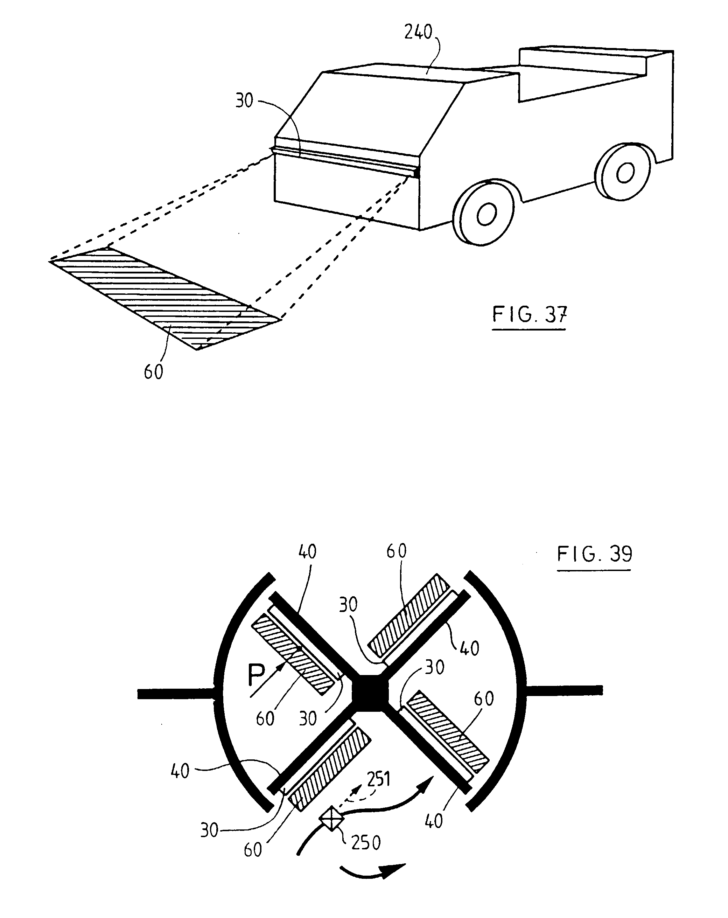

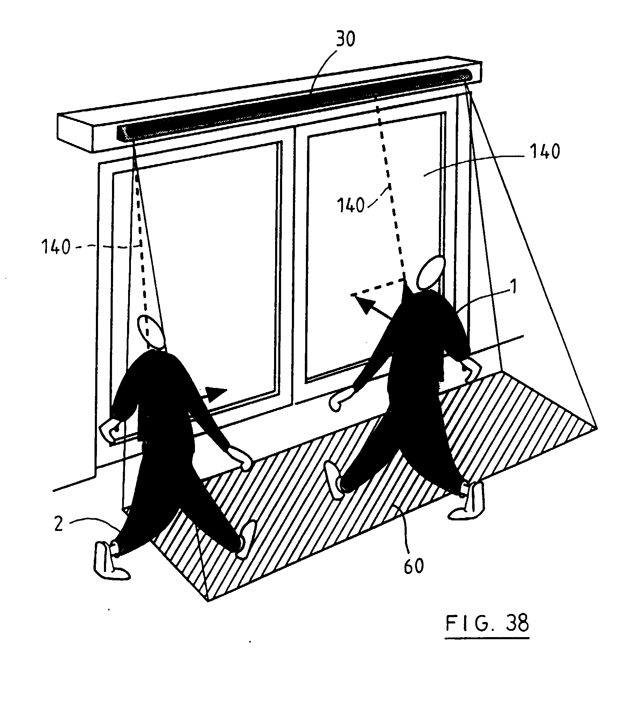

La figure 37 illustre le cas d'un véhicule de transport automatique 240, par exemple un chariot filoguidé. Le véhicule est équipé d'un détecteur 30 muni d'une antenne en guide d'ondes à fentes telle que décrite plus haut. Grâce au détecteur, d'une part, la largeur du lobe de détection 60 peut être adaptée à la largeur du véhicule et est proportionnelle à la longueur du guide d'ondes employé et d'autre part, la profondeur du lobe projeté devant le véhicule est suffisamment réduite, grâce aux réflecteurs utilisés, pour éviter des détections prématurées, notamment lorsque le véhicule change de direction.

Il est à remarquer qu'avec une antenne telle que décrite ci-avant, la direction de rayonnement principale indiquée par la flèche 140 sur la figure 24, est perpendiculaire au petit côté du guide d'ondes, et donc perpendiculaire au détecteur lui-même. Des composantes transversales existent cependant également, mais elles sont d'amplitude de loin inférieure à l'amplitude de la composante 140 du champ électromagnétique. C'est ainsi que l'invention permet de réaliser un détecteur de mouvement hyperfréquence ayant une direction privilégiée de détection.

La figure 38 représente un détecteur 30 disposé sur une porte automatique coulissante 40. Ce détecteur développe un lobe de détection noté 60 au niveau du sol. Il résulte de ce qui précède que seuls pourront ainsi être détectés les mobiles animés d'une composante de vitesse perpendiculaire au détecteur, c'est-à-dire suivant les directions notées 140. Le piéton 1, qui aborde la porte pratiquement perpendiculairement à celle-ci, sera détecté tandis que le piéton 2, qui se déplace parallèlement à la porte ne le sera pas. Toutefois, si au cours de son déplacement, le piéton 2 incurve sa trajectoire en direction de la porte, il génère une composante de vitesse en direction du détecteur et il sera détecté. Ce comportement sélectif du détecteur est hautement souhaitable lorsque le détecteur est installé par exemple sur une porte proche d'un trottoir ou d'une galerie commerciale. Dans ce cas, la détection du trafic parallèle constitue une nuisance, dans la mesure où les piétons qui déambulent parallèlement à la porte n'ont généralement pas l'intention d'y entrer.

Il est entendu que le détecteur peut également utiliser des antennes fonctionnellement équivalentes à celles qu'illustrent les figures 25 et 26. C'est notamment le cas d'une antenne dans laquelle un oscillateur à transistor à effet de champ (FET) piloté par un résonateur diélectrique (DRO) est utilisé en lieu et place de l'émetteur-récepteur 10 décrit précédemment. C'est le cas également des antennes planes à microrubans comportant un certain nombre d'éléments rayonnants interconnectés, dont les dimensions et les écartements permettent le rayonnement de lobes similaires à ceux qui sont rayonnés par l'antenne en guide d'ondes à fentes décrite plus haut.

Une variante avantageuse à ce système de détection du trafic parallèle consiste à utiliser un émetteur-récepteur unidirectionnel, connu en soi, au lieu de l'émetteur-récepteur 10 illustré sur les figures 25 et 26. Cet émetteur-récepteur unidirectionnel est constitué par exemple d'une cavité résonante, d'une diode Gunn pour la génération de l'onde électromagnétique, et de deux diodes Schottky, déphasées d'une fraction de longueur d'onde et constituant deux canaux de mesure. Les deux signaux fournis par les deux diodes Schottky sont analysés par un circuit discriminateur qui, en fonction du déphasage des signaux, permet de distinguer le mobile qui s'approche du mobile qui s'éloigne. L'utilisation de détecteurs sensibles uniquement aux mouvements d'approche est ainsi possible.

L'avantage de cette variante est double. Premièrement, comme de légères fluctuations de vitesse autour de la direction privilégiée de détection sont possibles, un système à deux canaux déphasés sera plus insensible à ces fluctuations lors de déplacements parallèles à l'axe du guide et l'absence de détection du trafic parallèle n'en sera que plus performante. Deuxièmement, un tel détecteur ne détecte pas les mobiles qui s'éloignent. Dans le cas d'application à une porte automatique, cela permet la fermeture prématurée de celle-ci, ce qui va dans le sens des économies d'énergie. Il n'est en effet pas nécessaire de maintenir la porte ouverte pendant qu'une personne s'en éloigne.

Plutôt que d'utiliser un émetteur-récepteur à deux canaux pour réaliser la variante décrite ci-dessus, il est possible également d'utiliser un émetteur-récepteur à un canal comme illustré sur les figures 25 et 26, et de constituer le second canal de mesure à partir d'une cavité passive fixée en lieu et place de la charge terminale et supportant une diode Schottky. Cette cavité passive a, par exemple, les dimensions de la cavité 10 illustrée sur les figures 1 à 3 mais ne comporte pas de diode Gunn. Une autre façon de réaliser cette variante de réalisation est d'utiliser l'antenne en guide d'ondes à fentes telle que représentée sur les figures 25 et 26, et d'implanter la seconde diode Schottky dans le guide d'ondes lui-même, entre la dernière fente et la charge terminale.

Il convient de signaler que le dispositif de détection peut être utilisé de manière doublement avantageuse sur les vantaux mobiles 40 d'une porte-tambour, comme illustré sur la figure 39. D'une part, la profondeur P du lobe 60 se trouve réduite. D'autre part, le détecteur 30 est insensible au trafic latéral, c'est-à-dire parallèlement au plan du vantail 40. Cela est favorable dans la mesure où un piéton 250, au moment où il s'engage dans un secteur ouvert de la porte, est animé d'une vitesse de déplacement dont la composante principale 251 est parallèle au plan de la porte. Or il est précisément souhaitable d'éviter une détection dans cette phase initiale de la progression du piéton.

Dans les applications illustrées aux figures 11 à 16, de même qu'à la figure 39, le détecteur se trouve agencé sur la ou les parties mobiles de la porte automatique, ou à bord d'un véhicule. Qu'il soit détecteur de mouvement ou détecteur de présence, un détecteur hyperfréquence se déplaçant avec un objet mobile voit son environnement changer par rapport à lui-même au cours de son déplacement. Tout se passe comme si le détecteur était fixe et que l'environnement se trouvait en déplacement relatif. Dans ces conditions, le signal utile délivré par le détecteur, soit le signal Doppler, soit un signal proportionnel à la puissance réfléchie, varie continuellement en fonction de l'environnement. En conséquence, il est impossible de fixer un seuil de détection représentatif d'un obstacle.

Afin de rendre fiable l'utilisation d'un détecteur de mouvement ou de présence fixé sur un dispositif mobile, il est proposé, conformément à l'invention, d'exploiter les signaux de détection fournis de la manière décrite dans ce qui suit.

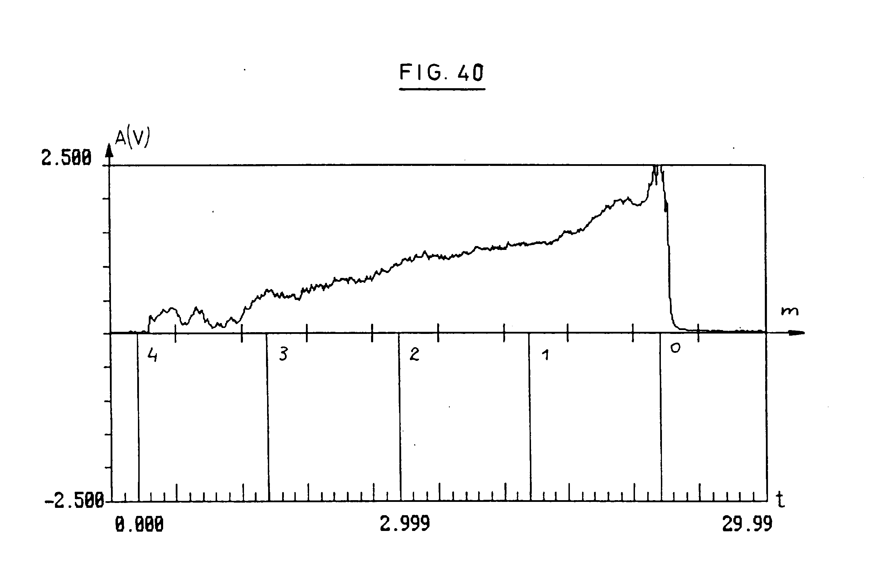

Un premier exemple d'application du procédé selon l'invention concerne la protection dans l'environnement de la porte-volet roulante illustrée aux figures 15 et 16. Le mouvement dangereux avec ce genre de porte est la descente, qui implique un risque de collision avec une personne ou un objet. Le bord inférieur de la porte-volet 40 est équipé d'un détecteur de mouvement à effet Doppler 30, muni par exemple d'une antenne ayant une longueur suffisante pour assurer une bonne couverture en largeur. Si l'on enregistre l'évolution du signal fourni par ce détecteur au cours du mouvement de la porte, entre la position haute (ouverte) et la position basse (fermée) et en l'absence d'obstacle dans le champ de détection, on obtient un signal de détection représenté sur la figure 40. On constate que ce signal est d'amplitude A(V) croissante, et correspond à l'approche relative de l'environnement par rapport au détecteur, d'abord lointain (partie gauche de la courbe) et ensuite de plus en plus proche (partie droite de la courbe). Les abscisses sont graduées en temps (de 0 à 30 secondes). Comme la vitesse de déplacement de la porte-volet roulante est constante, une deuxième échelle, proportionnelle à la hauteur du bord inférieur de la porte par rapport au sol, est également indiquée (de 4 m à 0 m).

Il est légitime de penser a priori qu'un détecteur, monté sur une porte en mouvement et soumis à des vibrations incessantes, produit des courbes d'évolution du signal de détection différentes d'un cycle de fermeture à l'autre. Les essais effectués dans les conditions décrites plus haut ont montré au contraire que la courbe mesurée et présentée à la figure 40 est parfaitement répétitive d'un cycle de fermeture à l'autre et peut, selon l'invention, servir de référence pour le processus logique de détection. En d'autres termes, la courbe présentée à la figure 40 est la signature de l'environnement par rapport au détecteur et peut constituer une courbe de référence qui est utilisée dans le procédé selon l'invention.

Ce procédé consiste à mesurer en permanence le signal utile fourni par le détecteur, par exemple un détecteur hyperfréquence à effet Doppler avec une antenne en guide d'ondes à fentes, et de comparer la valeur mesurée, à un instant donné, avec la valeur correspondante de la courbe de référence, préalablement mémorisée. Toute distorsion par rapport à la courbe de référence indique la présence d'un obstacle, cette information pouvant être exploitée pour assurer la sécurité dans l'environnement de la porte. Il est donc utile, selon l'invention, que le système de traitement du signal fourni par le détecteur effectue préalablement un cycle d'apprentissage de son environnement. Pour cette raison, il est commode d'architecturer le système de traitement du signal et de prise de décision autour d'un microprocesseur.

Au cours d'un cycle d'apprentissage, le microprocesseur, dans le cas de la porte-volet roulante illustrée aux figures 15 et 16, procède à l'acquisition et à la mémorisation du signal utile en fonction du temps, c'est-à-dire en fonction de la position de la porte et en l'absence d'obstacle dans son environnement. Le signal mémorisé a, par exemple, l'allure du signal illustré sur la figure 40. Si la vitesse de descente de la porte n'est pas suffisamment constante, un capteur de position, connu en soi, peut être utilisé afin de cadencer l'acquisition des mesures. Au besoin, le gain de la chaîne d'amplification du signal peut être rendu variable en fonction de la position du détecteur par rapport à l'environnement de manière à rendre la courbe de référence pratiquement constante.

Au cours de tout mouvement ultérieur de la porte, le microprocesseur compare la valeur mesurée à un instant donné - donc pour une position déterminée de la porte - avec la valeur correspondante de la courbe de référence. Si une distorsion apparaît entre ces deux valeurs, cela signifie que le détecteur a capté la présence d'un obstacle, et le processus de décision entraîne par exemple l'arrêt de la porte, ou sa remontée.

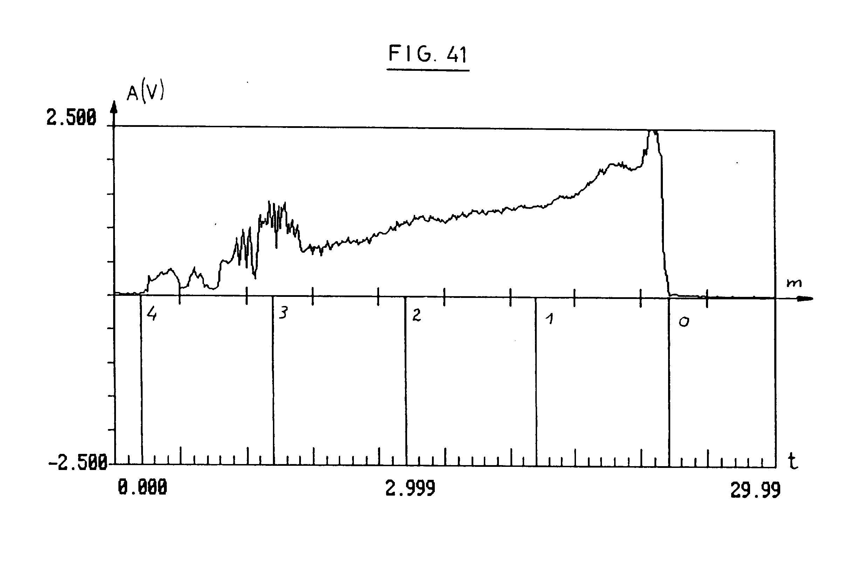

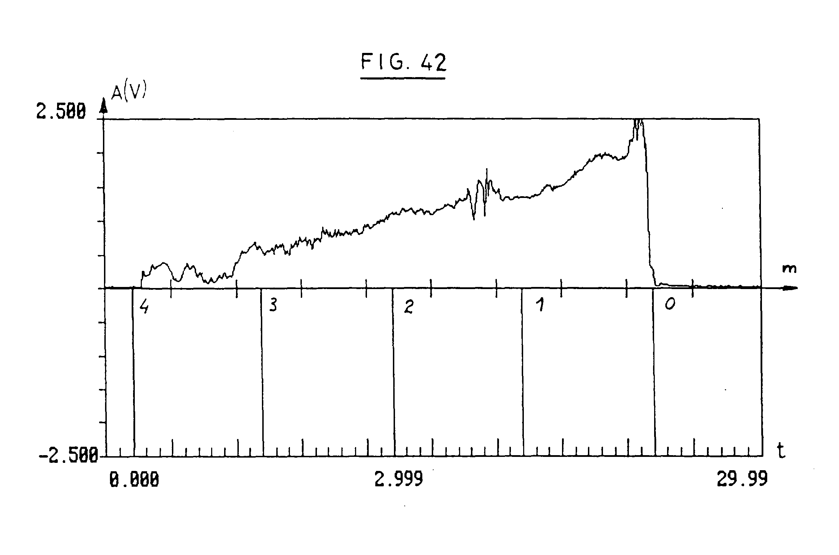

Ce genre de distorsion apparaît clairement sur les figures suivantes. La figure 41 montre comment une plaque d'aluminium, introduite dans, puis retirée du champ de détection du détecteur protégeant la porte-volet roulante décrite plus haut, affecte la courbe mesurée. On observe que la plaque d'aluminium est déjà détectée alors que la porte est à une hauteur d'environ 3,50 m au-dessus du sol. Cela est dû à la haute réflectivité de la plaque. La figure 42 montre comment ce même détecteur détecte une main introduite et retirée du champ de détection à une hauteur d'un mètre au-dessus du sol. Il apparaît que la main est détectée alors que la porte se trouve à une hauteur d'environ 1,50 m au-dessus du sol.

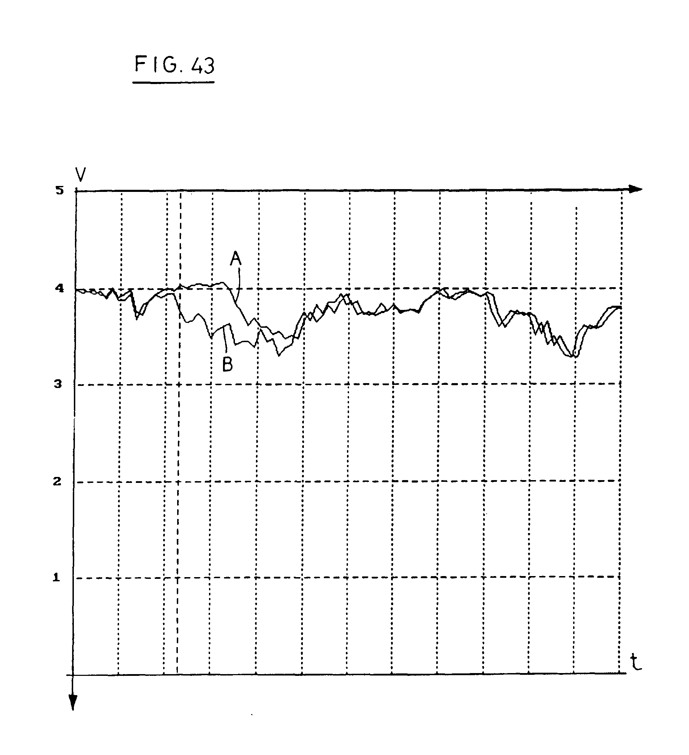

Un second exemple d'application du procédé selon l'invention concerne la protection devant les vantaux d'une porte-tambour, telle que représentée aux figures 11 et 12. Au cours d'une rotation complète de la porte, le microprocesseur procède à l'acquisition et à la mémorisation du signal utile en fonction du temps, c'est-à-dire en fonction de la position angulaire de la porte et en l'absence d'obstacle dans son environnement. Le signal mémorisé a, par exemple, l'allure du signal A illustré sur la figure 43. Si la vitesse de rotation de la porte n'est pas suffisamment constante, un capteur de position, connu en soi, peut être utilisé afin de cadencer l'acquisition des mesures. Pour une bonne compréhension de la figure 43, il convient de signaler que, pour des raisons liées au système d'acquisition utilisé, l'axe des ordonnées est inversé, et présente son origine au niveau 5.

Au cours de tout mouvement ultérieur de la porte, le microprocesseur compare la valeur mesurée à un instant donné - donc pour une position angulaire déterminée de la porte - avec la valeur correspondante de la courbe de référence. Si une distorsion apparaît entre ces deux valeurs, cela signifie que le détecteur a capté la présence d'un obstacle, et le processus de décision entraîne par exemple le ralentissement ou l'arrêt de la porte. Ce genre de distorsion apparaît clairement sur la courbe B de la figure 43, qui correspond à la présence d'une main introduite dans et ensuite retirée du champ de détection du détecteur.

La courbe de référence désignée par A sur la figure 43 peut, en fonction de la vitesse de rotation de la porte, être décalée proportionnellement vers les ordonnées positives ou négatives. Cela est dû à la bande passante de la chaîne d'amplification du signal. Il peut avantageusement être tiré parti de cette caractéristique qui est fonction de la vitesse de rotation et qui peut être préalablement mémorisée. En effet, dans le cas de la porte-tambour qui peut fonctionner avec plusieurs vitesses de rotation, la mémorisation préalable des ondes de référence à plusieurs vitesses permet d'une part de détecter un obstacle avec plus de précision, et d'autre part, d'adopter une action sur la porte en fonction de la vitesse : freinage plus ou moins énergique lors d'une détection.

Le procédé selonl'invention ne se limite pas au traitement du signal fourni par un détecteur de mouvement hyperfréquences à effet Doppler, muni d'une antenne comme mentionné ci-avant. Il peut avantageusement être utilisé dans le cadre de mesures effectuées avec d'autres types de détecteurs, comme par exemple les détecteurs infrarouges actifs. Dans ce cas, le signal de référence mesuré et mémorisé correspond à la réflexion du rayonnement infrarouge par l'environnement, en l'absence d'obstacle.

## Revendications

1. Procédé de détection de personnes et/ou objets dans l'environnement immédiat d'un dispositif automatique mobile au moyen d'un détecteur installé sur le disposirif mobile afin de couvrir un champ spatial de détection déterminé et produire un signal de détection pour commander le dispositif automatique mobile précité, caractérisé en ce qu'il comprend les étapes suivantes :
- le signal de détection est mesuré en fonction du mouvement du dispositif mobile en l'absence d'obstacle,
- l'évolution dudit signal est mémorisée dans une mémoire électronique pour servir de courbe de référence,
- la valeur du signal de détection utile est mesurée en permanence et comparée à la valeur correspondante de la courbe de référence précitée,
- l'écart entre la valeur mesurée du signal utile et la valeur correspondante de la courbe de référence est utilisé pour indiquer la présence d'un obstacle formé par une personne et/ou un objet dans le champ de détection.

2. Procédé suivant la revendication 1, caractérisé en ce que le détecteur effectue préalablement un cycle d'apprentissage de son environnement, au cours duquel le signal est saisi et mémorisé en fonction du temps.

## Patentansprüche

1. Verfahren zur Erfassung von Personen und/oder Gegenständen in unmittelbarer Umgebung einer beweglichen automatischen Vorrichtung mittels eines Detektors, der auf der beweglichen Vorrichtung installiert ist, um ein bestimmtes räumliches Erfassungsfeld abzudecken und ein Erfassungssignal zu erzeugen, um die vorgenannte bewegliche automatische Vorrichtung zu steuern, dadurch gekennzeichnet, dass es die folgenden Schritte umfasst:
- das Erfassungssignal wird in Abhängigkeit von der Bewegung der beweglichen Vorrichtung in Abwesenheit von Hindernissen gemessen,
- die Entwicklung des Signals wird in einem elektronischen Speicher gespeichert, um als Vergleichskurve zu dienen,
- der Wert des Gebrauchserfassungssignals wird fortlaufend gemessen und mit dem entsprechenden Wert der vorgenannten Vergleichskurve verglichen,
- die Abweichung zwischen dem gemessenen Wert des Gebrauchssignals und dem entsprechenden Wert der Vergleichskurve wird benutzt, um die Anwesenheit eines Hindernisses anzuzeigen, das von einer Person und/oder einem Gegenstand im Erfassungsfeld gebildet wird.

2. Verfahren nach Anspruch 1, dadurch gekennzeichnet, dass der Detektor zuvor einen Zyklus zum Erlernen seiner Umgebung ausführt, in dessen Verlauf das Signal erfasst und in Abhängigkeit von der Zeit gespeichert wird.

## Claims

1. A process for sensing persons and/or objects in the immediate environment of a movable automatic device by means of a sensor installed on the movable device so as to cover a determined spatial sensing field and produce a sensing signal to control the aforesaid movable automatic device, characterized in that it comprises the following steps :
- the sensing signal is measured as a function of the motion of the movable device in the absence of an obstacle,
- the evolution of said signal is stored in an electronic memory in order to serve as reference curve,
- the value of the useful sensing signal is measured continuously and compared with the corresponding value of the aforesaid reference curve,
- the deviation between the measured value of the useful signal and the corresponding value of the reference curve is used to indicate the presence of an obstacle formed by a person and/or an object in the sensing field.

2. The process as claimed in claim 1, characterized in that the sensor performs a cycle for learning its environment beforehand, during which the signal is captured and stored as a function of time.
